# EUROPEAN PATENT SPECIFICATION

(11) **EP 3 912 894 B1**
(45) Date of publication and mention of the grant of the patent: **04.01.2023**
(21) Application number: 21174787.8
(22) Date of filing: 19.05.2021
(51) Int. Cl.: B62J 15/02

(54) **BICYCLE MUDGUARD**
FAHRRADSCHUTZBLECH
GARDE-BOUE DE BICYCLETTE

(30) Priority: 19.05.2020 BE 202005350
(43) Date of publication of application: 24.11.2021
(73) Proprietor: CURANA INVEST BV, 8850 Ardooie (BE)
(72) Inventor: VENS, Dirk, 8800 Roeselare (BE)
(74) Representative: Ostyn, Frans

(56) References cited:
- EP-A2- 1 151 911
- DE-U1-202005 008 119
- TW-U- M 544 452

## Description

The present invention relates to a bicycle mudguard comprising a rod and a fastening device in order to fasten the rod to a bicycle component, wherein the fastening device comprises:
a clamping device comprising
   - a body in which a clamping passage is provided, wherein the rod extends through the clamping passage along a clamping surface which is formed by a wall surface that delimits the clamping passage, and
   - at least one clamping element, which is movable and/or deformable transversely to the longitudinal direction of the rod in order to be brought from a non-clamping position into a clamping position, wherein the clamping element brought into the clamping position pushes the rod against the clamping surface, so that the rod is detained in a fixed position in the clamping device, and
an elongated fastening means in order to fasten the clamping device to a bicycle component, wherein the clamping device and the fastening means are provided to realize the fastening by moving the fastening means according to the longitudinal direction of the rod with respect to the clamping device, and wherein the clamping device comprises transmission means in order to transmit to the clamping element the motion of the fastening means in such a way during this movement that this clamping element is moved and/or deformed transversely to the longitudinal direction until it reaches the clamping position.
Bicycles are provided with mudguards in order to prevent the splashing of water and dirt which is transported by the wheels during travel. Known mudguards generally have the shape of an elongated and relatively narrow strip of material which is fastened above the wheel. The wheel is here held between the two legs of a wheel fork, and the mudguard is fastened above the wheel to a fixed bicycle component, for example to the bridge which connects the two legs of the wheel fork one to the other.

EP 1 151 911 A2 discloses all of the features of the preamble of claim 1.

In order to be able to realize a sufficiently stable fastening of the mudguard, the mudguard usually also comprises two mudguard rods fastened to the mudguard (in this patent application also referred to as 'rods'), which rods, in the installed state above a wheel, running side by side, extend from the mudguard on either side of the wheel and, in the vicinity of their free ends, are connected to a respective fixed point of the bicycle that is located, for example, in the vicinity of the wheel axle. Generally, the mudguard rods are connected to a respective leg of the wheel fork in question.

In order to fasten the mudguard rods to the legs of the wheel fork, it is known to fasten, for each rod, a respective clamping device to a leg of the wheel fork by means of a first screw, and to fix the rod in its usage position in the clamping device by means of a second screw which extends transversely to the direction of the rod.

An important drawback of such a fastening of the mudguard rods lies in the fact that an assembly of a mudguard rod and two screws, whereof at least one extends in a transverse direction with respect to the rod, has from an aesthetic viewpoint an insufficiently compact, rather untidy look. It is also difficult to integrate such a combination of clamped rod and two screws within an elongated and, in the transverse direction, compact housing. It is even impossible to construct such a housing with closed side walls.

Another important drawback is that the fastening of a mudguard rod should be effected in two successive steps, wherein firstly the clamping device is secured and then the rod is clamped in place, with the result that this fastening is time-consuming and not very user friendly.

In EP 1151911 A2 and TW M544452 U, other devices for the fastening of mudguard rods are described. These devices have the characteristics from the first paragraph of this description. However, the compactness in the transverse direction and the user friendliness of these devices leaves something to be desired. Moreover, the fastening means remain visible and these define the look of the fastening device. This limits the freedom of design. An aesthetic shaping with closed side walls is hence also impossible.

The object of the present invention is to remedy the earlier stated drawbacks by providing a mudguard having at least one rod and means for fastening each rod to a bicycle component, which means are more user-friendly, produce a more compact look and can be integrated more easily and with more freedom of design in an elongated and, in the transverse direction, compact housing having closed side walls.

These objectives are achieved by providing a bicycle mudguard having the characteristics stated in the first paragraph of this description, wherein, according to the present invention, in the clamping element is provided a first clamping passage, the said clamping passage in the body is a second clamping passage, the clamping element and the body are provided such that the first and the second clamping passage lie in alignment, that the rod extends through the first and the second clamping passage, that the body comprises at least one guide surface, that the clamping element comprises at least one contact surface, which, during the movement of the fastening means, is moved over a guide surface of the body, so that the clamping element is moved according to the transverse direction until it has reached the clamping position. By the expression 'the clamping element pushes the rod against the clamping surface' is meant in this patent application that the motion of the clamping element is transmitted to the rod, so that the rod is pushed against the clamping surface, wherein this motion transmission can be realized both by direct contact between the clamping element and the rod and indirectly via one or more other elements.

By the term 'transmission means' is meant in this patent application means provided with force-transmitting contact surfaces with which the motion of the fastening means in a specific direction can be mechanically translated into a motion of the clamping element in another direction. These can be contact surfaces of respective bodies which are moved according to a rectilinear or curvilinear or a closed motional path. Also rotating bodies such as levers or gearwheels or the like belong to the transmission means which are here referred to.

The transmission of the motion of the fastening means to the clamping element can be effected indirectly, via one or more other elements having force-transmitting contact surfaces, but can also be effected by direct contact between interacting contact surfaces which are provided on the fastening means and on the clamping element respectively. In the last case, these contact surfaces then fulfil the function of the said transmission means.

By "deformation in the transverse direction or transversely to the longitudinal direction" is meant in this patent application a deformation which alters the shape of the clamping element such that the distance in the transverse direction between the rod and the surface of the clamping element becomes smaller, until eventually, once the clamping position is reached, the clamping element butts against the rod and exerts on it a transversely directed force.

A 'motion in the transverse direction or a motion transversely to the longitudinal direction' denotes in this patent application a motion having a component in the said transverse direction.

By 'a rod or a mudguard rod' is meant in this patent application an element connected to the mudguard, which element is provided to connect the mudguard to a fixed component of a bicycle. This element is preferably, but not necessarily, elongated, and can constitute part of the mudguard, or can be a one-piece element or an element made up of a plurality of parts which has been separately produced and has been fastened to the mudguard either detachably or non-detachably.

By pushing a rod of a mudguard according to the invention against the clamping surface, the resistance to motion of the rod according to its longitudinal direction (in other words, the frictional force to be surmounted in this longitudinal direction) is increased to the extent that the rod is detained in the clamping device.

In a bicycle mudguard according to the present invention, the fastening means with which the clamping device is fastened to a bicycle component acts also as an operating means to move or deform the clamping element into the clamping position. The clamping of the rod and the fastening of the clamping device takes place simultaneously during the same action. Such an action is more user friendly and also proceeds faster than in the known bicycle mudguards.

Because only one fastening means is necessary to realize the fastening and the clamping, the fastening device can also be more compactly constructed. Moreover, because the fastening means extends in the longitudinal direction of the rod, the fastening device can be realized with a very great compactness in the transverse direction. After all, the fastening device does not have to be much wider in the transverse direction than the sum of the transverse dimensions of the rod and the fastening means.

Because the fastening device comprises no fastening means or operating means which extend in a transverse direction and must thus be reachable from a side edge, the entire fastening device according to the invention can be integrated in a housing having closed side walls. From an aesthetic viewpoint, such a housing is preferable to an element having screws which are accessible from the side. Moreover, the housing can also be very compact in the transverse direction, so that the fastening device can be constructed in an aesthetically attractive, elongated and laterally closed element.

If the fastening means is, for example, a screw or a bolt which is movable according to the longitudinal direction of the rod, only the head of the screw or bolt has to be reachable on one of the end sides of the elongated housing. On one of these end sides is accordingly provided a mouth of a passage for the rod.

In a first type of particular bicycle mudguards according to the present invention, the clamping device comprises
a) a positioning element movable by the fastening means in the longitudinal direction, comprising a positioning surface which, in a plane in which the axis of the rod is located, extends according to a direction which moves away from the rod in the direction of the movement of the fastening means, and
b) a clamping element movable in a transverse direction, comprising
   - a first contact surface for realizing a pushing force on the rod, and
   - at least one second contact surface which, during the movement of the positioning element, is in contact with the positioning surface, wherein the positioning surface is moved over the first contact surface,
so that the clamping element, during the said movement of the fastening means, is moved by the jointly moved positioning element in a transverse direction in a motional direction, wherein the first contact surface of the clamping element approaches the rod until the clamping element has reached the clamping position.

In a second type of particular bicycle mudguards according to the present invention, the clamping device comprises
a) a guide surface, which, in a plane in which the axis of the rod is located, extends according to a direction which is non-parallel with and non-perpendicular to the axis of the rod,
b) a clamping element movable by the fastening means, comprising a first contact surface for realizing a pushing force on the rod, and at least one second contact surface,
which, during the movement of the clamping element, is moved over the guide surface, so that the clamping element, during the said movement of the fastening means, is jointly moved and is hereby moved in a transverse direction in a motional direction, wherein the first contact surface of the clamping element approaches the rod until the clamping element has reached the clamping position.

The said clamping passage in the body acts, on the one hand, as a support for the rod at the beginning of the fastening of the clamping device, and then, as the fastening progresses, a boundary wall of this same clamping passage acts as a clamping surface against which the rod is pushed, so that the rod, as a result of the increased friction between the rod and this clamping surface, is detained in the longitudinal direction.

Alternatively or additionally, the clamping element comprises a clamping passage, the rod extends through this clamping passage of the clamping element, and the said first contact surface for realizing a pushing force on the rod is formed by a wall surface that delimits this clamping passage.

By (also) providing in the clamping element a clamping passage for the rod, an (additional) support for the rod at the beginning of the fastening of the clamping device is obtained. As the fastening progresses, the clamping element is moved in the transverse direction, with the result that a wall surface that delimits this clamping passage approaches the rod and eventually comes into contact with the rod and exerts a pushing force on the rod in order to push the rod against the clamping surface. The said wall surface then acts as the 'first contact surface' of the clamping element. Moreover, the contact between this wall and the rod increases the frictional force on the rod, with the result that this rod is detained still better in the clamping device.

By providing each guide surface on the clamping body and providing each second contact surface on the clamping element, whilst, moreover, the boundary walls of the first and the second clamping passage can respectively act as the first contact surface and as the clamping surface, the fastening device can be very compact in the transverse direction and the fastening of the clamping device and the simultaneous fixing of the rod can be effected in a very smooth and user-friendly manner.

Preferably, the clamping element and the clamping body are provided such that they are moved, by the interaction of each guide surface and each second contact surface, during the movement of the fastening means, in opposite motional directions in the transverse direction.

In a preferred embodiment, the clamping body, as a result of its movement, here exerts a pushing force on the rod, wherein this pushing force has a direction which is practically opposite to the direction of the pushing force which is exerted on the rod by the clamping element.

The clamping element and the body can here be provided such that the rod, as a result of the pushing force exerted thereon by the body, is pushed against a surface of the clamping element.

Because the body pushes the rod against a surface, the body has the function of a second clamping element and the surface of the clamping element has the function of a clamping surface.

Preferably, the body exerts the pushing force on the rod via a wall surface that delimits the second clamping passage of the body. In a particularly advantageous embodiment, on the mutually facing sides of the clamping body and the clamping element, respectively at least two guide surfaces and at least two second contact surfaces are provided, and each second contact surface of the clamping element is provided to be moved, during the said movement of the fastening element, over a respective guide surface of the clamping body.

In a very advantageous embodiment, the at least two guide surfaces are formed by flanks of respective channels which are provided side by side on the clamping body in a row extending according to the transverse direction, and the at least two second contact surfaces are formed by flanks of respective teeth which are provided side by side on the clamping element in a row extending according to the transverse direction.

In a preferred embodiment of the second type of bicycle mudguards according to the present invention, the clamping element comprises a first fastening means passage extending according to the longitudinal direction, the body comprises a second fastening means passage extending according to the longitudinal direction, the first and the second fastening means passage lie in alignment, the fastening means is provided to extend through the first and the second fastening means passage and to be moved in these passages according to the longitudinal direction when the clamping device is fastened to a bicycle component.

Because the fastening means extends through the clamping element and the body, the fastening means can be better held in its correct position. Also the movement of the clamping element as a result of the movement of the fastening means can be realized more easily in a compact manner. This movement can be realized, for example, by means of a fastening means having a head and a threaded shank, wherein the fastening means extends with the shank through both fastening means passages, whilst the head is located on that side of the clamping element that is facing away from the body, and wherein the fastening means, in the execution of the fastening, is moved by the screw thread in the direction of the body and hereupon transports the clamping element in this same direction because the head is in contact with that wall of the clamping element that is located around the passage.

The first fastening means passage here has such a transverse dimension according to the said transverse direction that the clamping element, with respect to the fastening means located in the first fastening means passage, can be moved in the transverse direction until it has reached the clamping position.

In a preferred embodiment of the first or the second type of bicycle mudguards, the said fastening means is preferably a fastening means which is provided with screwing means, such as, for example, a bolt or a screw, and which is provided to be moved according to its longitudinal direction, with respect to the clamping device, when the clamping device is fastened to a bicycle component.

In a preferred embodiment of both types of mudguards according to the present invention, the fastening means has an elongated shape and has a longitudinal axis which extends in practically the same direction as the longitudinal axis of the rod.

In a very preferred embodiment, the position of the rod in the clamping device according to the longitudinal direction of the rod is adjustable, wherein the rod can be detained, according to choice, in one of at least two different positions in the clamping device.

As a result, the distance between the mudguard and the clamping device can be adjusted in order to be able to fasten the mudguard on bicycles of mutually different dimensions in the most suitable position with respect to a wheel. Preferably, the position of the rod with respect to the clamping device is steplessly adjustable according to the longitudinal direction of the rod.

In a preferred embodiment of the first or second type of bicycle mudguards according to the present invention, the ratio [(A + B)/C] between, on the one hand, the sum of the greatest transverse dimension (A) of the rod and the greatest transverse dimension (B) of the fastening means, and, on the other hand, the greatest transverse dimension (C) of the fastening device, is at least 0.60, preferably at least 0.70, is most preferably at least 0.80, wherein the said greatest transverse dimensions are measured according to the said transverse direction.

The present invention further relates also to a bicycle comprising at least one bicycle mudguard having any of the characteristics of the appended claims.

The bicycle can be provided with such a bicycle mudguard according to the present invention only on a front wheel, or only on a rear wheel, or on both wheels.

In a bicycle according to the present invention, the said bicycle component is preferably a wheel fork in which a front wheel or a rear wheel is held, wherein the mudguard preferably comprises two rods which, running on either side of the wheel, are fastened to a respective leg of the wheel fork.

The invention is now explained in greater detail on the basis of the hereinafter following more detailed description of a possible embodiment of a bicycle mudguard according to the present invention.

It is here emphasized that the hereinafter described device is only an example of the general principle of the invention and thus can by no means be regarded as a limitation of the scope of the protection, nor of the field of application of the invention. In this detailed description, reference is made by means of reference numerals to the accompanying figures, whereof
- Figure 1 shows a side view of the front fork and the front wheel of a bicycle, and a mudguard comprising two rods and a clamping device with which the rods are fastened to the front fork.
- Figure 2 shows a portion of the side view of Figure 1 in enlarged representation,
- Figure 3a represents the clamping device separately in perspective view,
- Figures 3b and 3c show respectively the top side and the bottom side of the clamping device represented in Figure 3a,
- Figures 3d, 3e, and 3f show respectively the left-hand side, the front side and the right-hand side of the clamping device represented in Figure 3a,
- Figures 4a, and 4b show the two parts of a first embodiment of the clamping device in perspective view,
- Figures 4c and 4d show a cross section according to the longitudinal direction of those parts of the clamping device which are shown in Figures 4a and 4b,
- Figures 5a, 5b and 5c represent a cross section according to the longitudinal direction of the first embodiment of the clamping device, in three successive situations during the fastening of the clamping device to the front fork, and the simultaneous bringing of a rod of the mudguard into a clamping position,
- Figure 5d shows the same cross section as Figure 5c, whilst the rod has been brought into a different position in the clamping position,
- Figures 6a, 6b, and 6c represent a cross section according to the longitudinal direction of a second embodiment of the clamping device, in three successive situations during the fastening of the clamping device to the front fork and the simultaneous bringing of a rod of the mudguard into a clamping position.

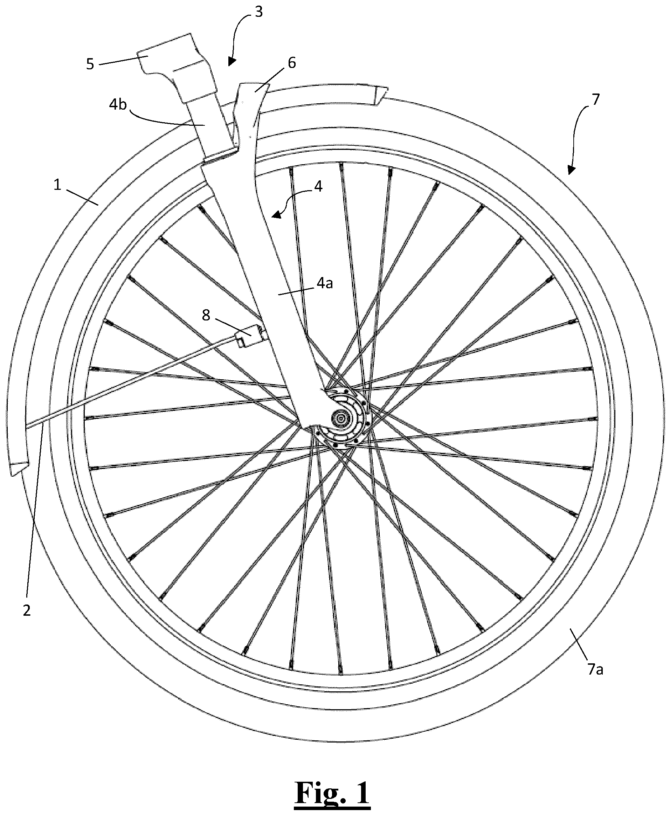

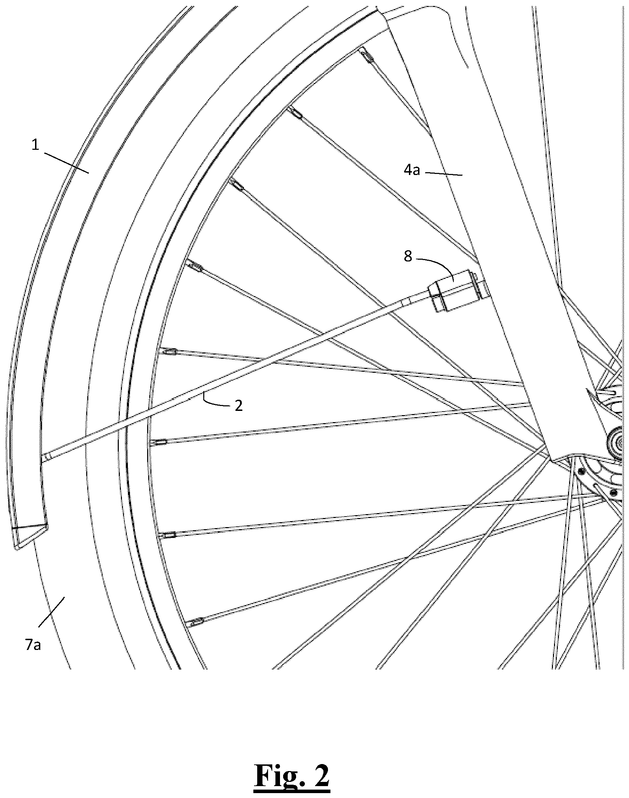

A bicycle comprises a frame which is connected to a front fork and to a rear fork which respectively bear a front wheel (7) and a rear wheel. Opposite each wheel, a mudguard is fastened. In Figure 1, only the front fork (3) with the front wheel (7) and the mudguard fastened opposite the front wheel (7) is shown. In Figure 2, a portion of that which is illustrated in Figure 1 is shown in enlarged representation.

The front fork (3) comprises two legs (4), which extend practically side by side in parallel on either side of the front wheel (7). The front fork (3) is a spring-mounted front fork and each leg (4) comprises for this purpose a first part (4a) and a second part (4b) which are connected to each other in alignment, wherein the first part (4a) is located at the bottom and is connected to the front wheel (7), and the second part (4b) is located at the top and is movable downwards, counter to a spring force, with respect to the first part (4a). The second parts (4b) of both legs (4) are connected at the top to a common connecting piece (5), which is higher connected to a steering rod to which the handlebar is fastened (not represented in Figures 1 and 2).

Furthermore, the front fork (3) also comprises a bridge part (6), which connects both first parts (4a) of the legs (4) one to another and extends above the front wheel (7).

The front wheel (7) comprises a wheel axle, which is rotatably accommodated in an axle holder that is connected to the two first parts (4a) of the legs (4), in the vicinity of the free ends of these first parts (4a). The front wheel (7) is hereby held rotatably between the two legs (4) of the front fork (3).

The bicycle mudguard according to the present invention comprises an aluminium mudguard body (1), which has the shape of an arc of a circle and is fastened to the front fork (3) of the bicycle in a position wherein it extends at a small distance apart from the tyre (7a) of the front wheel (7) and follows the circumference of the wheel. In addition, the mudguard (1) also comprises two rods (2), which are connected to the mudguard body (1) and extend on either side of the front wheel (7) and run practically parallel with the front wheel (7) and are connected by their ends to a respective leg (4) of the front fork (3).

The mudguard body (1) is held in a fixed position by virtue of the fact that, on the one hand, it is fastened to the above-extending bridge part (6) of the front fork (3), and, on the other hand, is also connected via the rods (2) to the two legs (4) of the front fork (3).

The connection of each rod (2) to a respective leg (4) is effected by means of a respective clamping device (8). This clamping device (8) is fastened by means of a bolt (9) to the first part (4a) of the leg (4). The rod (2) is brought in the clamping device (8) into the position wherein the mudguard body (1) has the desired usage position with respect to the wheel (7) and is clamped in this position by means of the clamping device (8).

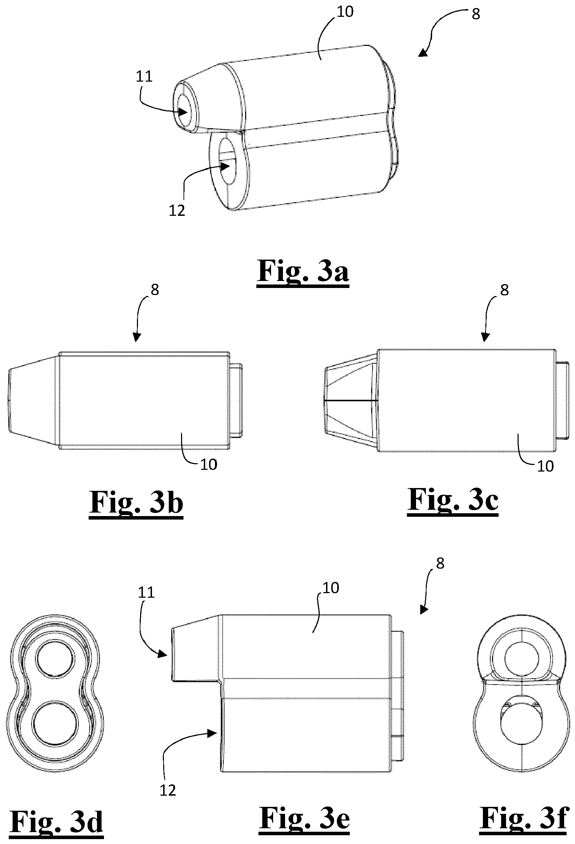

This clamping device (8) - see Figures 3a to 3f - comprises a housing (10), in which are provided two passages (11), (12) which extend side by side in parallel according to the longitudinal direction (L) of the clamping device and open out on the front side and on the rear side of the housing (10). The uppermost passage (11) serves as a passage for a mudguard rod (2), and the lowermost passage (12) serves as a passage for the bolt (9).

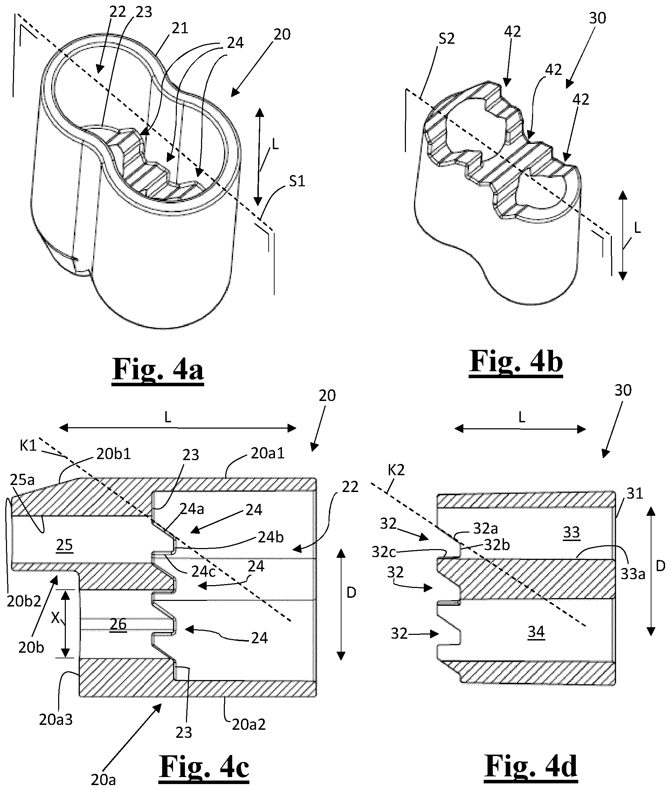

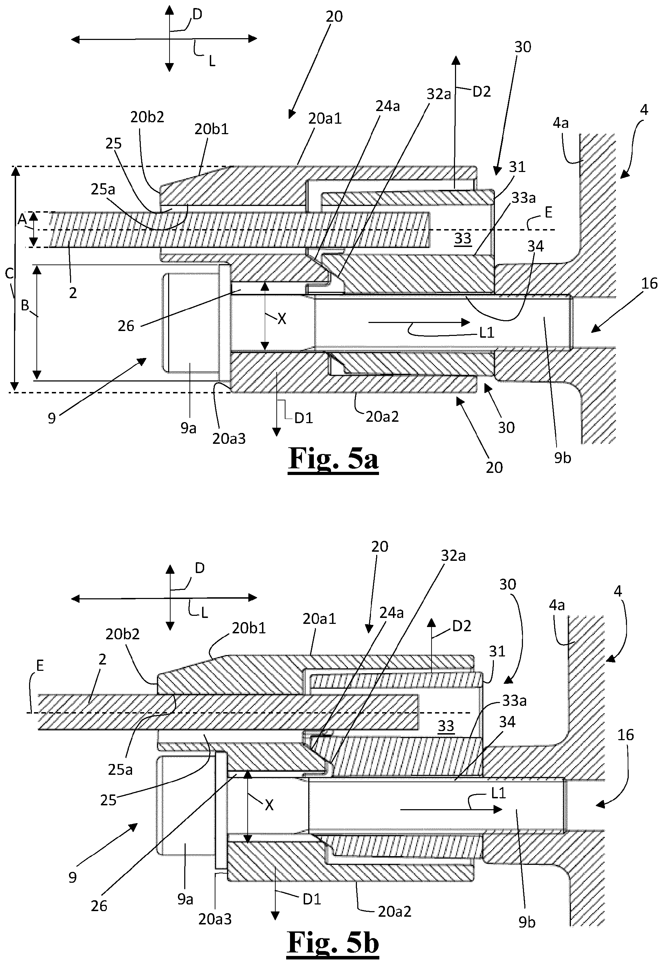

In a first particular embodiment (see Figures 4a to 4d and 5a to 5d), the clamping device (8) comprises two parts, a clamping element (20) and a clamping body (30). Figure 4c is a cross section according to the section (S1) indicated in Figure 4a. Figure 4d is a cross section according to the section (S2) indicated in Figure 4b.

The clamping element (20) comprises an outside wall (21), which defines the elongated rounded outer shape of the clamping element (20), and exhibits a base (20a) having a transverse profile that is uniform in the longitudinal direction (L) and to which a narrow end portion (20b) is adjoined. A flank (20a1) of the base portion (20a) merges into a flank (20b1) of the end portion (20b), so that the clamping element (20) on the one side has a lengthened flank (20a1, 20b1) and on the opposite side a shorter flank (20a2).

The clamping element (20) comprises a hollow space (22), which is open at the one end of the clamping element (20) and is laterally enclosed by the outside wall (21), and extends from the one end with a uniform transverse profile over a portion of the length of the clamping element (20).

The clamping element (20) forms an internal transverse wall (23), which delimits the hollow space (22) and which has a surface that is profiled such that three teeth (24), which extend rectilinearly and side by side in parallel, are formed. Each row of teeth (24) extends in a direction which lies perpendicular to the direction of the section (S1) indicated in Figure 4a. Each tooth (24) here has practically the same tooth profile, wherein the tooth (24) narrows in the direction of an end face (24b) which lies practically perpendicular to the longitudinal direction (L). Each tooth has a right flank (24c), which lies practically perpendicular to the end face (24b), and has on the opposite side an oblique flank (24a), which extends in a plane (K1) that forms an acute angle with the longitudinal direction (L) and moves away from the extended flank (20a1), (20b1) of the clamping element (20) in the direction of the end face (24b).

Through the transverse wall (23) are provided two passages (25), (26), which extend side by side in parallel according to the longitudinal direction (L) and which, on the one hand, open out into the hollow space (22) and, on the other hand, open out into the end surface (20b2, 20a3) of the clamping device. The one passage (25) extends through the narrower end portion (20b) and opens out into the end surface (20b2) of this end portion (20b). The passage (25) is laterally delimited by a wall surface (25a). This passage (25) is provided for the rod (2) and is hereinafter referred to as the first rod passage (25). The other passage (26) opens out into the end surface (20a3) of the base portion (20a) and is provided for the bolt (9), and is hereinafter referred to as the first bolt passage (26).

The clamping body (30) has a transverse profile which matches the profile of the hollow space (22) in the clamping element (30), and has at the one end an end surface (31) that extends according to the transverse direction (D) and at the other end a surface that is profiled such that three channels (32), which are respectively provided to interact with the three teeth (24) of the clamping element (20), are formed. The channels (32) are likewise rectilinear and extend side by side in parallel in a direction which lies perpendicular to the direction of the section (S2) that is indicated in Figure 4b. The two sections (S1) and (S2) are parallel to each other. Each channel (32) here has practically the same channel profile and comprises an oblique flank (32a), which extends in a plane (K2) that is practically parallel with the planes (K1) in which the oblique flanks (24a) of the teeth (24) are located. Each channel (32) also comprises a bottom face (32b), which extends in the transverse direction (D), and a right flank (32c), which extends in the longitudinal direction (L).

Through the clamping body (30) are provided two passages (33), (34), which extend side by side in parallel according to the longitudinal direction (L). The one passage (33) is provided for the rod (2) and is hereinafter referred to as the second rod passage (33), whilst the other passage (34) is provided for the bolt (9) and is hereinafter referred to as the second bolt passage (34). The passage (33) is laterally delimited by a wall surface (33 a).

The clamping device is assembled (see Figures 5a to 5d) by bringing the clamping body (30) along the open side into the hollow space (22) of the clamping element (20). The oblique flank (24a) of each tooth (24) of the clamping element (20) here ends up opposite an oblique flank (32a) of a respective channel (32) of the clamping body (30). The first rod passage (25) and the first bolt passage (26) in the clamping element (20) lie in alignment with respectively the second rod passage (33) and the second bolt passage (34) in the clamping body (30). The mutually adjoining passages (25) and (33) thus together form a 'passage for the rod (2)', whilst the mutually adjoining passages (26) and (34) together form a 'passage for the bolt (9)', analogously to the passages (11), (12) which are indicated in Figures 3a and 3e.

This clamping device (8) is fastened to the leg (4) of the front fork (3) by means of a bolt (9) having a head (9a) and a threaded shank (9b). For this purpose, in the first part (4a) of the leg (4) is provided an opening (16), in which is provided a screw thread that is complementary to the screw thread of the bolt shank (9b). The bolt (9) is brought into the said first (26) and second bolt passages (34) and is screwed into the opening (16) in the leg (4). The head (9a) hereupon comes into contact with the end surface (20a3) of the clamping element (20), and the end surface (31) of the clamping body (30) is pushed against the front fork.

As the bolt (9) is screwed further into the opening (16), this is moved according to the direction of movement (L1). As a result, a force directed according to the direction of movement (L1) is exerted on the clamping element (20) by the head (9a). The oblique flanks (24a) of the teeth (24) of the clamping element (20) are then in contact with the respective oblique flanks (32a) of the channels (32), so that the force on the clamping element (20) is transmitted via these oblique flanks (24a), (32a) to the clamping body (30) (see Figure 4a). This force hereby gives rise to transversely directed force components on the clamping element (20) and the clamping body (30), having a mutually opposite direction (D1), (D2). The clamping element (20), under the influence of the force exerted thereon, is moved in the direction (D1) until the position has been reached wherein it has pushed the rod (2) to against the wall surface (33a) which delimits the second rod passage (33). This position of the clamping element (20) is referred to as the clamping position. This movement is possible since the passage (26) of the clamping element (20) has a transverse dimension (X) in the transverse direction (D) which is greater than the diameter of the bolt shank (9b). By contrast, the passage (34) in the clamping body (30) has a transverse dimension which is only a little greater than the diameter of the bolt shank (9b) and allows practically no movement of the clamping body (30) with respect to the bolt shank (9). As a result, the clamping body (30) cannot or can scarcely be moved in the transverse direction (D) under the influence of the force exerted thereon.

In an alternative embodiment (not represented in the figures), the clamping device (8) could be constructed such that also the passage (34) in the clamping body (30) has a greater transverse dimension than the diameter of the bolt shank (9b), with the result that also the clamping body (30) can be moved under the influence of the force exerted thereon. The clamping element (20) and the clamping body (30) would then be moved in opposite directions (D1), (D2) during the screwing-in of the bolt (9). These movements of the clamping element (20) and the clamping body can either be made in one continuous movement, or in successive smaller movements over a part of the distance. In this context, the clamping element (20) and the clamping body (30) can be moved simultaneously, but their movements can also not coincide or only partially coincide.

As a result of this movement in the opposite direction (D2), the clamping body (30) would then, with the wall surface (33a) of the second rod passage (33), push against the rod (2) and exert a transversely directed force on the rod (2). The rod (2) would hereby be pushed against the wall surface (25a) of the first rod passage (25) in the clamping element (20). In such an embodiment, the clamping body (30) accordingly has the function of a clamping element, since it pushes the rod (2) against a clamping surface - i.e. the wall surface (25a).

The clamping element (20) pushes with its wall surface (25a) against the rod (2), whereby the rod is pushed against the wall surface (33a) of the clamping body (30), whilst also the clamping body (30) pushes with its wall surface (33a) against the rod (2), with the result that the rod is pushed also against the wall surface (25a) of the clamping element (20).

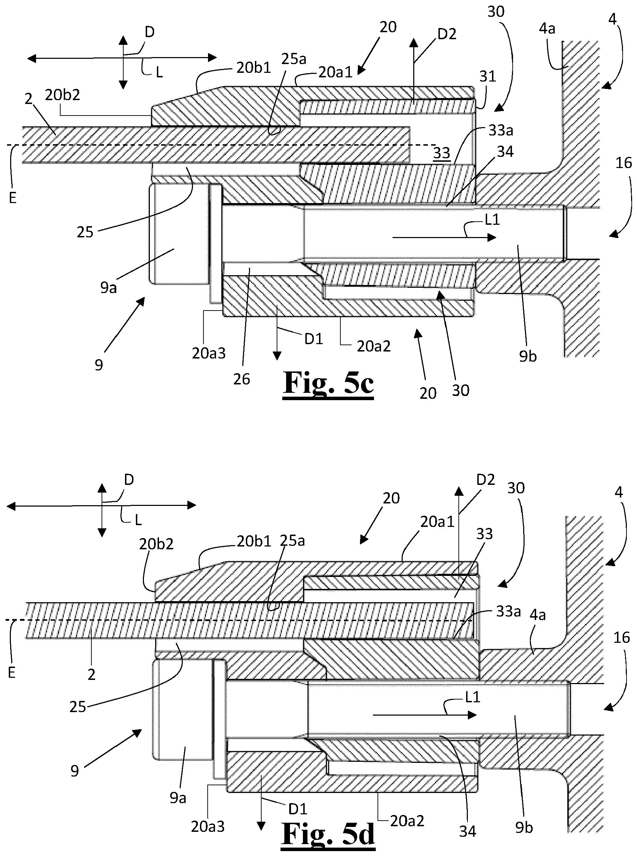

In the embodiment represented in Figures 5a to 5d, the clamping element (20), during the screwing down of the bolt (9), is firstly moved until the wall surface (25a) of the first rod passage (25) is in contact with the rod (2), as represented in Figure 5b. In a following phase of the fastening, the clamping body (30) is moved further in this direction (D1) and hereupon also moves the rod (2) in this direction (D1) until the rod (2) is located against the wall surface (33a) of the second rod passage (33) in the clamping body (30). This is the situation which is represented in Figure 5c. The said wall surfaces (25a), (33a) which are in contact with the rod (2) are located, with respect to the rod (2), on opposite sides of the rod (2).

The rod (2) is pushed by the clamping element (20) against the wall surface (33a) of the clamping body (30). As the bolt (9) is screwed further into the opening (16), the force components on the clamping element (20) and the clamping body (30) become greater, and also the forces on the rod (2) become greater. The rod (2) is hereby clamped in a very effective manner between the wall surfaces (25a), (33a) and detained in a fixed position with respect to the clamping element (20) and the clamping body (30).

In Figure 5d, the rod (2) is clamped into the clamping device (8) in a position which, with respect to its position in Figures 5a to 5c, is moved to the right according to the direction of the longitudinal axis (E) of the rod (2). The rod (2) can be clamped into the clamping device (8) in any position. As a result, the distance between the mudguard and the clamping device (8) can be steplessly adjusted in order to fasten the mudguard in the most suitable position with respect to a wheel.

The clamping device (8) according to the present invention can be constructed very compactly in the transverse direction (D). A measure of this compactness (see Figure 5a) is the ratio between, on the one hand, the sum (A + B) of the greatest transverse dimension (A) of the rod (2) and the greatest transverse dimension (B) of the fastening means (9) and, on the other hand, the greatest transverse dimension (C) of the fastening device (8). In the case of the clamping device which is represented in Figure 4a, this ratio is approximately 0.68.

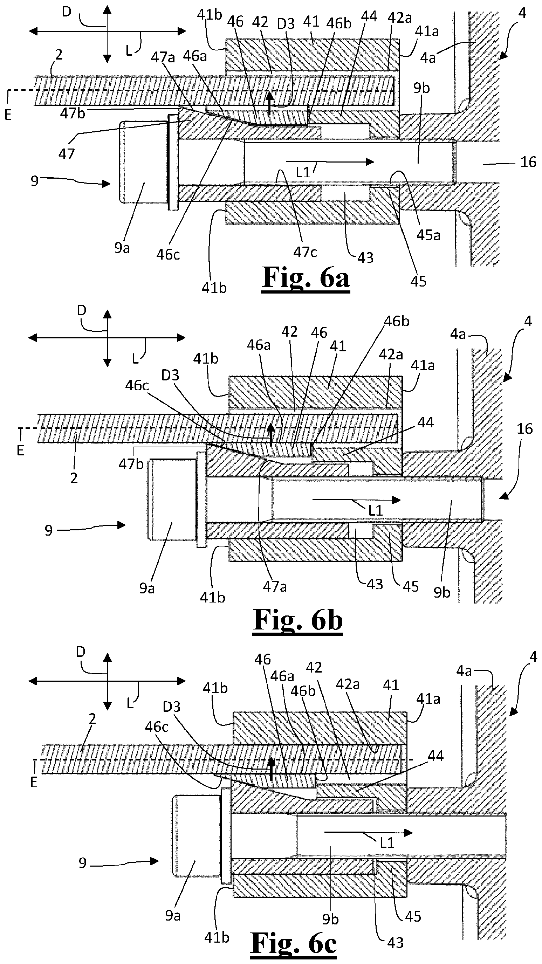

A second particular embodiment is described with reference to Figures 6a, 6b and 6c, which are cross sections of the clamping device according to a section that contains the axis (E) of the rod (2).

This clamping device (8) is likewise fastened by means of a bolt (9) to the leg (4) of the fork (3), wherein the bolt (9) is screwed into an opening (16) in the leg (4) and is here moved in a direction of movement (L1).

This clamping device (8) comprises an elongated base piece (41) having a uniform transverse profile in the longitudinal direction (L), in which a cylindrical passage (42), which extends according to this longitudinal direction (L), is provided for the rod (2). This passage (42) is open at both ends and opens out into the foremost end face (41a) and the rearmost end face (41b) of the base piece (41). The passage (42) is laterally delimited by a wall surface (42a).

In the base piece (41) is also provided a chamber (43), which is separated from the passage (42) by a partition wall (44). The chamber (43) is open at the one end of the base piece (41) and is delimited at the other end by a bottom wall (45).

A plate-like clamping element (46) is accommodated in a recess in the partition wall (44) and is movable with respect to the partition wall (44), in a transverse motional direction (D3) in the direction of the rod (2). The clamping element (46) has a first contact surface (46a) directed towards the rod (2), and has on its foremost margin a transverse edge (46b) which butts against the partition wall (44), has on the side directed towards the chamber (43) a second contact surface (46c) which is bevelled and extends from the rearmost margin of the clamping element (46) in a plane that moves away from the axis (E) of the rod (2) in the direction of movement (L1).

In addition, this clamping device (8) also comprises a positioning element (47) whereof a foremost portion is accommodated in the chamber (43) and a rearmost portion projects, via the open side of the chamber (43), beyond the chamber (43). The foremost portion of the positioning element (47) has a profile which matches the profile of the space in the chamber (33). The rearmost portion has an end surface (47b) which extends in the transverse direction and, on the side which is directed towards the rod (2), is provided with a positioning surface (47a) that extends in a plane which moves away from the axis (E) of the rod (2) in the direction of movement (L1) and which is practically parallel with the bevelled contact surface (46c) of the clamping element (46).

In the positioning element (47) is provided a passage (47c) for the bolt (9). In the bottom wall (45) is also provided a passage (45a) for the bolt (9). These bolt passages (47c), (45a) lie in alignment.

For the fastening of the clamping device (8), the positioning element (47) is placed partly in the chamber (43) and a bolt (9) is provided with its head (9a) against the end surface (47b) and the shank (9b) through the passages (47c), (45a) of the positioning element (47), so that the bolt shank (9b) projects past the bottom wall (45). The clamping device (8) is placed with the foremost end face (41a) against the leg (4), so that the therein provided bolt passages (47c), (45a) lie in alignment with the opening (16) in the leg (4).

The bolt shank (9b) is placed into the opening (16) in the leg (4) of the front fork (3) and the bolt (9) is partially screwed into this opening (16) in order to fasten the clamping device (9).

The rod (2) is placed into the passage (42) in the position wherein the mudguard is located in the desired position with respect to the wheel. This is the situation which is represented in Figure 6a.

By the turning of the bolt (9), this is screwed further into the opening (16), with the result that this is moved according to the direction of movement (L1). Because the head (9a) is in contact with the end surface (47b) of the positioning element (47), this positioning element (47) is hereupon likewise moved in the direction of movement (L1).

Because the bevelled second contact surface (46c) of the clamping element (46) is in contact with the positioning surface (47a) of the positioning element (47), the clamping element (46), during the movement of the positioning element (47) in the motional direction (D3), is moved to against the rod (2), as represented in Figure 6b.

During this movement of the clamping element (46), the contact surface (46a) of the clamping element (46) comes into contact with the rod (2). As the bolt (9) is screwed further into the opening (16) and is moved in the direction of movement (L1), the clamping element (46) is further moved in the direction (D3), with the result that the clamping element (46) exerts a pushing force on the rod (2) and also moves the rod (2) and eventually pushes this against the wall surface (42a) that delimits the passage (42). The rod (2) is then clamped in a fixed position between the clamping element (46) and the wall surface (42a).

## Claims

1. Bicycle mudguard comprising a rod (2) and a fastening device (8, 9) in order to fasten the rod (2) to a bicycle component (3), wherein the fastening device comprises,
- a clamping device (8) comprising a body (30) in which a clamping passage (33) is provided, wherein the rod (2) extends through the clamping passage (33) along a clamping surface (33a) which is formed by a wall surface (33a) that delimits the clamping passage (33), and at least one clamping element (20), which is movable and/or deformable transversely to the longitudinal axis (E) of the rod (2) in order to be brought from a non-clamping position into a clamping position, wherein the clamping element (20) brought into the clamping position pushes the rod (2) against the clamping surface (33a), so that the rod (2) is detained in a fixed position in the clamping device (8), and
- an elongated fastening means (9) in order to fasten the clamping device (8) to a bicycle component (3),
wherein the clamping device (8) and the fastening means (9) are provided to realize the fastening by moving the fastening means (9) according to the longitudinal direction (L) of the rod (2) with respect to the clamping device (8), and wherein the clamping device (8) comprises transmission means in order to transmit to the clamping element (20) the motion of the fastening means (9) in such a way during this movement that this clamping element is moved and/or deformed transversely to the longitudinal direction (L) until it reaches the clamping position, **characterized in that** in the clamping element (20) is provided a first clamping passage (25), and the clamping passage (33) in the body (30) is a second clamping passage (33), **in that** the clamping element (20) and the body (30) are provided such that the first (25) and the second clamping passage (33) lie in alignment, **in that** the rod (2) extends through the first (25) and the second clamping passage (33), **in that** the body (30) comprises at least one guide surface (32a), **in that** the clamping element (20) comprises at least one contact surface (24a), which, during the movement of the fastening means (9), is moved over a guide surface (32a) of the body (30), so that the clamping element (20) is moved according to the transverse direction (D) until it has reached the clamping position.

2. Bicycle mudguard according to Claim 1, **characterized in that** the clamping device comprises
- a guide surface (32a), which, in a plane in which the axis (E) of the rod (1) is located, extends according to a direction (K2) which is non-parallel with and non-perpendicular to the axis (E) of the rod (1),
- a clamping element (20) movable by the fastening means (9), comprising a first contact surface (25a) for realizing a pushing force on the rod (2), and at least one second contact surface (24a), which, during the movement of the clamping element (20), is moved over the guide surface (32a),
so that the clamping element (20), during the said movement of the fastening means (9), is jointly moved and is hereby moved in a transverse direction (D) in a motional direction (D1), (D2) wherein the first contact surface (25a) of the clamping element (20) approaches the rod (2) until the clamping element (20) has reached the clamping position.

3. Bicycle mudguard according to Claim 1, **characterized in that** the clamping device (8) comprises,
- a positioning element (47) movable by the fastening means (9) in the longitudinal direction (L), comprising a positioning surface (47a) which, in a plane in which the axis (E) of the rod (2) is located, extends according to a direction which moves away from the rod (2) in the direction of movement (L1) of the fastening means (9),
- a clamping element (46) movable in a transverse direction (D), comprising a first contact surface (46a) for realizing a pushing force on the rod (2), and at least one second contact surface (46c), which, during the movement of the positioning element (47), is in contact with the positioning surface (47a), wherein the positioning surface (47a) is moved over the second contact surface (46c),
so that the clamping element (46), during the said movement of the fastening means (9), is moved by the jointly moved positioning element (47) in a transverse direction (D) in a motional direction (D1), wherein the first contact surface (46a) of the clamping element (46) approaches the rod (2) until the clamping element (46) has reached the clamping position.

4. Bicycle mudguard according to Claims 2 or 3, **characterized in that** the said first contact surface for realizing a pushing force on the rod (2) is formed by a wall surface (25a) that delimits the said clamping passage (25) of the clamping element (20).

5. Bicycle mudguard according to one of the preceding claims, **characterized in that** the clamping element (20) and the body (30) are provided such that they are moved, by the interaction of each guide surface (32a) and each contact surface (24a), during the movement of the fastening means (9), in opposite motional directions (D1), (D2) in the transverse direction (D).

6. Bicycle mudguard according to Claim 5, **characterized in that** the body (30) is provided to, as a result of its movement, exert a pushing force on the rod (2), wherein this pushing force has a direction (D2) which is practically opposite to the direction (D1) of the pushing force which is exerted on the rod (2) by the clamping element (20).

7. Bicycle mudguard according to Claim 6, **characterized in that** the clamping element (20) and the body (30) are provided such that the rod (2), as a result of the pushing force exerted thereon by the body (30), is pushed against a surface (25a) of the clamping element (20).

8. Bicycle mudguard according to Claim 6 or 7, **characterized in that** the body (30) exerts the pushing force on the rod (2) via a wall surface (33a) that delimits the second clamping passage (33) of the body (30).

9. Bicycle mudguard according to one of the preceding claims, **characterized in that**, on the mutually facing sides of the body (30) and the clamping element (20), respectively at least two guide surfaces (32a) and at least two second contact surfaces (24a) are provided, and **in that** each second contact surface (24a) of the clamping element (20) is provided to be moved, during the said movement of the fastening element (9), over a respective guide surface (32a) of the body (30).

10. Bicycle mudguard according to Claim 9, **characterized in that** the at least two guide surfaces are formed by flanks (32a) of respective channels (32) which are provided side by side on the body (30) in a row extending according to the transverse direction (D), **in that** the at least two second contact surfaces (24a) are formed by flanks (24a) of respective teeth (24) which are provided side by side on the clamping element (20) in a row extending according to the transverse direction (D).

11. Bicycle mudguard according to one of the preceding claims, **characterized in that** the clamping element (20) comprises a first fastening means passage (26) extending according to the longitudinal direction (L), **in that** the body (30) comprises a second fastening means passage (34) extending according to the longitudinal direction (L), **in that** the first (26) and the second fastening means passage (34) lie in alignment, **in that** the fastening means (9) is provided to extend through the first (26) and the second fastening means passage (34) and to be moved in these passages (26), (34) according to the longitudinal direction (L) when the clamping device (8) is fastened to a bicycle component (3).

12. Bicycle mudguard according to Claim 11, **characterized in that** the first fastening means passage (26) in the clamping element (20) has such a transverse dimension (X) according to the said transverse direction (D) that the clamping element (20), with respect to the fastening means (9) located in the first fastening means passage (26), can be moved in the transverse direction (D) until it has reached the clamping position.

13. Bicycle mudguard according to one of the preceding claims, **characterized in that** the fastening means (9) is provided with screwing means in order to be moved according to its longitudinal direction, with respect to the clamping device (2), when the clamping device (8) is fastened to a bicycle component (3).

14. Bicycle mudguard according to one of the preceding claims, **characterized in that** the position of the rod (2) in the clamping device (8) according to the direction of the longitudinal axis (L) of the rod (2) is adjustable, and **in that** the rod (2) can be detained, according to choice, in one of at least two different positions in the clamping device (8).

15. Bicycle comprising at least one bicycle mudguard having the characteristics of one or more of the preceding claims.

## Patentansprüche

1. Fahrradschutzblech, das eine Stange (2) und eine Befestigungsvorrichtung (8, 9) zum Befestigen der Stange (2) an einer Fahrradkomponente (3) umfasst, wobei die Befestigungsvorrichtung Folgendes umfasst,
- eine Klemmvorrichtung (8), die einen Körper (30), in dem ein Klemmdurchgang (33) bereitgestellt ist, wobei sich die Stange (2) durch den Klemmdurchgang (33) entlang einer Klemmfläche (33a) erstreckt, die durch eine Wandfläche (33a) gebildet ist, die den Klemmdurchgang (33) begrenzt, und mindestens ein Klemmelement (20), das quer zur Längsachse (E) der Stange (2) beweglich und/oder verformbar ist, um von einer Nicht-Klemmposition in eine Klemmposition gebracht zu werden, umfasst, wobei das Klemmelement (20), wenn es in die Klemmposition gebracht ist, die Stange (2) derart gegen die Klemmfläche (33a) drückt, dass die Stange (2) in einer fixierten Position in der Klemmvorrichtung (8) gehalten ist, und
- ein längliches Befestigungsmittel (9) zum Befestigen der Klemmvorrichtung (8) an einer Fahrradkomponente (3),
wobei die Klemmvorrichtung (8) und das Befestigungsmittel (9) derart bereitgestellt sind, dass die Befestigung durch Bewegen des Befestigungsmittels (9) entsprechend zur Längsrichtung (L) der Stange (2) in Bezug auf die Klemmvorrichtung (8) realisiert wird, und wobei die Klemmvorrichtung (8) Übertragungsmittel zum Übertragen der Bewegung des Befestigungsmittels (9) während dieser Bewegung derart auf das Klemmelement (20) umfasst, dass das Klemmelement quer zur Längsrichtung (L) bewegt und/oder verformt wird, bis es die Klemmposition erreicht, **dadurch gekennzeichnet, dass** in dem Klemmelement (20) ein erster Klemmdurchgang (25) bereitgestellt ist und der Klemmdurchgang (33) in dem Körper (30) ein zweiter Klemmdurchgang (33) ist, dadurch, dass das Klemmelement (20) und der Körper (30) derart bereitgestellt sind, dass der erste (25) und der zweite Klemmdurchgang (33) in Flucht liegen, dadurch, dass sich die Stange (2) durch den ersten (25) und den zweiten Klemmdurchgang (33) erstreckt, dadurch, dass der Körper (30) mindestens eine Führungsfläche (32a) umfasst, dadurch, dass das Klemmelement (20) mindestens eine Kontaktfläche (24a) umfasst, die während der Bewegung des Befestigungsmittels (9) über eine Führungsfläche (32a) des Körpers (30) derart bewegt wird, dass das Klemmelement (20) entsprechend zur Querrichtung (D) bewegt wird, bis es die Klemmposition erreicht hat.

2. Fahrradschutzblech nach Anspruch 1, **dadurch gekennzeichnet, dass** die Klemmvorrichtung Folgendes umfasst
- eine Führungsfläche (32a), die sich in einer Ebene, in der sich die Achse (E) der Stange (1) befindet, entsprechend zu einer Richtung (K2) erstreckt, die nicht parallel zu und nicht senkrecht zu der Achse (E) der Stange (1) ist,
- ein Klemmelement (20), das durch das Befestigungsmittel (9) bewegbar ist, das eine erste Kontaktfläche (25a) zum Realisieren einer Druckkraft auf die Stange (2) und mindestens eine zweite Kontaktfläche (24a), die während der Bewegung des Klemmelements (20), über die Führungsfläche (32a) bewegt wird, umfasst,
so dass das Klemmelement (20) während der Bewegung des Befestigungsmittels (9) gemeinsam bewegt wird und hierdurch in einer Querrichtung (D) in eine Bewegungsrichtung (D1), (D2) bewegt wird, in der sich die erste Kontaktfläche (25a) des Klemmelements (20) der Stange (2) annähert, bis das Klemmelement (20) die Klemmposition erreicht hat.

3. Fahrradschutzblech nach Anspruch 1, **dadurch gekennzeichnet, dass** die Klemmvorrichtung (8) Folgendes umfasst,
- ein Positionierungselement (47), das durch das Befestigungsmittel (9) in der Längsrichtung (L) bewegbar ist, das eine Positionierungsfläche (47a) umfasst, die sich in einer Ebene, in der sich die Achse (E) der Stange (2) befindet, entsprechend zu einer Richtung erstreckt, die sich von der Stange (2) in die Richtung einer Bewegung (L1) des Befestigungsmittels (9) weg bewegt,
- ein Klemmelement (46), das in einer Querrichtung (D) bewegbar ist, das eine erste Kontaktfläche (46a) zum Realisieren einer Druckkraft auf die Stange (2) und mindestens eine zweite Kontaktfläche (46c), die während der Bewegung des Positionierungselements (47) in Kontakt mit der Positionierungsfläche (47a) ist, umfasst, wobei die Positionierungsfläche (47a) über die zweite Kontaktfläche (46c) bewegt wird,
so dass das Klemmelement (46) während der Bewegung des Befestigungsmittels (9) durch das gemeinsam bewegte Positionierungselement (47) in einer Querrichtung (D) in eine Bewegungsrichtung (D1) bewegt wird, in der sich die erste Kontaktfläche (46a) des Klemmelements (46) der Stange (2) annähert, bis das Klemmelement (46) die Klemmposition erreicht hat.

4. Fahrradschutzblech nach Anspruch 2 oder 3, **dadurch gekennzeichnet, dass** die erste Kontaktfläche zum Realisieren einer Druckkraft auf die Stange (2) durch eine Wandfläche (25a) gebildet ist, die den Klemmdurchgang (25) des Klemmelements (20) begrenzt.

5. Fahrradschutzblech nach einem der vorhergehenden Ansprüche, **dadurch gekennzeichnet, dass** das Klemmelement (20) und der Körper (30) derart bereitgestellt sind, dass sie durch das Zusammenwirken jeder Führungsfläche (32a) und jeder Führungsfläche (24a) während der Bewegung des Befestigungsmittels (9) in entgegengesetzte Bewegungsrichtungen (D1), (D2) in der Querrichtung (D) bewegt werden.

6. Fahrradschutzblech nach Anspruch 5, **dadurch gekennzeichnet, dass** der Körper (30) derart bereitgestellt ist, dass er infolge seiner Bewegung eine Druckkraft auf die Stange (2) ausübt, wobei die Druckkraft eine Richtung (D2) aufweist, die praktisch entgegengesetzt zu der Richtung (D1) der Druckkraft ist, die durch das Klemmelement (20) auf die Stange (2) ausgeübt wird.

7. Fahrradschutzblech nach Anspruch 6, **dadurch gekennzeichnet, dass** das Klemmelement (20) und der Körper (30) derart bereitgestellt sind, dass die Stange (2) infolge der durch den Körper (30) darauf ausgeübten Druckkraft gegen eine Fläche (25a) des Klemmelements (20) gedrückt wird.

8. Fahrradschutzblech nach Anspruch 6 oder 7, **dadurch gekennzeichnet, dass** der Körper (30) die Druckkraft auf die Stange (2) über eine Wandfläche (33a) ausübt, die den zweiten Klemmdurchgang (33) des Körpers (30) begrenzt.

9. Fahrradschutzblech nach einem der vorhergehenden Ansprüche, **dadurch gekennzeichnet, dass** auf den sich zugewandten Seiten des Körpers (30) und des Klemmelements (20) jeweils mindestens zwei Führungsflächen (32a) und mindestens zwei zweite Kontaktflächen (24a) bereitgestellt sind, und dadurch, dass jede zweite Kontaktfläche (24a) des Klemmelements (20) derart bereitgestellt ist, dass sie während der Bewegung des Befestigungselements (9) über eine jeweilige Führungsfläche (32a) des Körpers (30) bewegt wird.

10. Fahrradschutzblech nach Anspruch 9, **dadurch gekennzeichnet, dass** die mindestens zwei Führungsflächen durch Flanken (32a) jeweiliger Kanäle (32) gebildet sind, die nebeneinander an dem Körper (30) in einer Reihe bereitgestellt sind, die sich entsprechend zur Querrichtung (D) erstreckt, dadurch, dass die mindestens zwei Kontaktflächen (24a) durch Flanken (24a) jeweiliger Zähne (24) gebildet sind, die nebeneinander an dem Klemmelement (20) in einer Reihe bereitgestellt sind, die sich entsprechend zur Querrichtung (D) erstreckt.

11. Fahrradschutzblech nach einem der vorhergehenden Ansprüche, **dadurch gekennzeichnet, dass** das Klemmelement (20) einen ersten Befestigungsmitteldurchgang (26) umfasst, der sich entsprechend zur Längsrichtung (L) erstreckt, dadurch, dass der Körper (30) einen zweiten Befestigungsmitteldurchgang (34) umfasst, der sich entsprechend zur Längsrichtung (L) erstreckt, dadurch, dass der erste (26) und der zweite Befestigungsmitteldurchgang (34) in Flucht liegen, dadurch, dass das Befestigungsmittel (9) derart bereitgestellt ist, dass es sich durch den ersten (26) und den zweiten Befestigungsmitteldurchgang (34) erstreckt und in den Durchgängen (26), (34) entsprechend zur Längsrichtung (L) bewegt wird, wenn die Klemmvorrichtung (8) an einer Fahrradkomponente (3) befestigt wird.

12. Fahrradschutzblech nach Anspruch 11, **dadurch gekennzeichnet, dass** der erste Befestigungsmitteldurchgang (26) in dem Klemmelement (20) eine derartige Querabmessung (X) entsprechend zur Querrichtung (D) aufweist, dass das Klemmelement (20) in Bezug auf das Befestigungsmittel (9), das sich in dem ersten Befestigungsmitteldurchgang (26) befindet, in der Querrichtung (D) bewegt werden kann, bis es die Klemmposition erreicht hat.

13. Fahrradschutzblech nach einem der vorhergehenden Ansprüche, **dadurch gekennzeichnet, dass** das Befestigungsmittel (9) mit Schraubmitteln versehen ist, um entsprechend zu seiner Längsrichtung in Bezug auf die Klemmvorrichtung (2) bewegt zu werden, wenn die Klemmvorrichtung (8) an einer Fahrradkomponente (3) befestigt wird.

14. Fahrradschutzblech nach einem der vorhergehenden Ansprüche, **dadurch gekennzeichnet, dass** die Position der Stange (2) in der Klemmvorrichtung (8) entsprechend zur Richtung der Längsachse (L) der Stange (2) einstellbar ist, und dadurch, dass die Stange (2) wunschgemäß in einer von mindestens zwei unterschiedlichen Positionen in der Klemmvorrichtung (8) gehalten werden kann.

15. Fahrrad, umfassend mindestens ein Fahrradschutzblech, das die Eigenschaften von einem oder mehreren der vorhergehenden Ansprüche aufweist.

## Revendications

1. Garde-boue de bicyclette comprenant une tige (2) et un dispositif de fixation (8, 9) afin de fixer la tige (2) à un composant de bicyclette (3), le dispositif de fixation comprenant,
un dispositif de serrage (8) comprenant un corps (30) dans lequel un passage de serrage (33) est pratiqué, la tige (2) s'étendant à travers le passage de serrage (33) le long d'une surface de serrage (33a) qui est formée par une surface de paroi (33a) qui délimite le passage de serrage (33), et au moins un élément de serrage (20), qui est mobile et/ou déformable transversalement à l'axe longitudinal (E) de la tige (2) afin d'être amené d'une position de non-serrage à une position de serrage, l'élément de serrage (20) amené dans la position de serrage poussant la tige (2) contre la surface de serrage (33a), de sorte que la tige (2) soit retenue dans une position fixe dans le dispositif de serrage (8), et
un moyen de fixation allongé (9) afin de fixer le dispositif de serrage (8) à un composant de bicyclette (3),
le dispositif de serrage (8) et le moyen de fixation (9) étant fournis pour effectuer la fixation en déplaçant le moyen de fixation (9) selon la direction longitudinale (L) de la tige (2) par rapport au dispositif de serrage (8), et le dispositif de serrage (8) comprenant un moyen de transmission afin de transmettre à l'élément de serrage (20) le mouvement du moyen de fixation (9) de sorte que, pendant ce mouvement, cet élément de serrage soit déplacé et/ou déformé transversalement à la direction longitudinale (L) jusqu'à ce qu'il atteigne la position de serrage, **caractérisé en ce que** dans l'élément de serrage (20) est pourvu d'un premier passage de serrage (25), et le passage de serrage (33) dans le corps (30) est un second passage de serrage (33), **en ce que** l'élément de serrage (20) et le corps (30) sont fournis de sorte que le premier (25) et le second passage de serrage (33) se trouvent en alignement, **en ce que** la tige (2) s'étend à travers le premier (25) et le second passage de serrage (33), **en ce que** le corps (30) comprend au moins une surface de guidage (32a), **en ce que** l'élément de serrage (20) comprend au moins une surface de contact (24a) qui, lors du mouvement du moyen de fixation (9), est déplacée sur une surface de guidage (32a) du corps (30), de sorte que l'élément de serrage (20) soit déplacé selon la direction transversale (D) jusqu'à ce qu'il ait atteint la position de serrage.

2. Garde-boue de bicyclette selon la revendication 1, **caractérisé en ce que** le dispositif de serrage comprend
une surface de guidage (32a) qui, dans un plan dans lequel l'axe (E) de la tige (1) est situé, s'étend selon une direction (K2) qui est non parallèle et non perpendiculaire à l'axe (E) de la tige (1),
un élément de serrage (20) pouvant être déplacé par le moyen de fixation (9), comprenant une première surface de contact (25a) pour exercer une force de poussée sur la tige (2), et au moins une seconde surface de contact (24a), qui, pendant le mouvement de l'élément de serrage (20), est déplacée sur la surface de guidage (32a),
de sorte que l'élément de serrage (20), pendant ledit mouvement du moyen de fixation (9), soit déplacé conjointement et soit ainsi déplacé dans une direction transversale (D) dans une direction de mouvement (D1), (D2) dans laquelle la première surface de contact (25a) de l'élément de serrage (20) s'approche de la tige (2) jusqu'à ce que l'élément de serrage (20) ait atteint la position de serrage.

3. Garde-boue de bicyclette selon la revendication 1, **caractérisé en ce que** le dispositif de serrage (8) comprend
un élément de positionnement (47) pouvant être déplacé par le moyen de fixation (9) dans la direction longitudinale (L), comprenant une surface de positionnement (47a) qui, dans un plan dans lequel l'axe (E) de la tige (2) est situé, s'étend selon une direction qui s'éloigne de la tige (2) dans la direction de déplacement (L1) du moyen de fixation (9),
un élément de serrage (46) mobile dans une direction transversale (D), comprenant une première surface de contact (46a) pour exercer une force de poussée sur la tige (2), et au moins une seconde surface de contact (46c), qui, pendant le mouvement de l'élément de positionnement (47), est en contact avec la surface de positionnement (47a), la surface de positionnement (47a) étant déplacée sur la seconde surface de contact (46c),
de sorte que l'élément de serrage (46), pendant ledit mouvement du moyen de fixation (9), soit déplacé par l'élément de positionnement (47) déplacé conjointement dans une direction transversale (D) dans une direction de mouvement (D1), la première surface de contact (46a) de l'élément de serrage (46) approchant de la tige (2) jusqu'à ce que l'élément de serrage (46) ait atteint la position de serrage.

4. Garde-boue de bicyclette selon la revendication 2 ou 3, **caractérisé en ce que** ladite première surface de contact pour exercer une force de poussée sur la tige (2) est formée par une surface de paroi (25a) qui délimite ledit passage de serrage (25) de l'élément de serrage (20) .

5. Garde-boue de bicyclette selon l'une des revendications précédentes, **caractérisé en ce que** l'élément de serrage (20) et le corps (30) sont fournis de sorte qu'ils sont déplacés, par l'interaction de chaque surface de guidage (32a) et de chaque surface de contact (24a), pendant le mouvement du moyen de fixation (9), dans des directions de mouvement opposées (D1), (D2) dans la direction transversale (D).

6. Garde-boue de bicyclette selon la revendication 5, **caractérisé en ce que** le corps (30) est fourni pour, du fait de son mouvement, exercer une force de poussée sur la tige (2), cette force de poussée ayant une direction (D2) qui est pratiquement opposée à la direction (D1) de la force de poussée qui est exercée sur la tige (2) par l'élément de serrage (20).

7. Garde-boue de bicyclette selon la revendication 6, **caractérisé en ce que** l'élément de serrage (20) et le corps (30) sont fournis de sorte que la tige (2), en conséquence de la force de poussée exercée sur elle par le corps (30), soit poussée contre une surface (25a) de l'élément de serrage (20).

8. Garde-boue de bicyclette selon la revendication 6 ou 7, **caractérisé en ce que** le corps (30) exerce la force de poussée sur la tige (2) par l'intermédiaire d'une surface de paroi (33a) qui délimite le second passage de serrage (33) du corps (30).

9. Garde-boue de bicyclette selon l'une des revendications précédentes, **caractérisé en ce que**, sur les côtés mutuellement opposés du corps (30) et de l'élément de serrage (20), respectivement au moins deux surfaces de guidage (32a) et au moins deux secondes surfaces de contact (24a) sont fournies, et **en ce que** chaque seconde surface de contact (24a) de l'élément de serrage (20) est fournie pour être déplacée, pendant ledit mouvement de l'élément de fixation (9), sur une surface de guidage (32a) respective du corps (30).

10. Garde-boue de bicyclette selon la revendication 9, **caractérisé en ce que** les au moins deux surfaces de guidage sont formées par des flancs (32a) de canaux (32) respectifs qui sont fournis côte à côte sur le corps (30) dans une rangée s'étendant selon la direction transversale (D), **en ce que** les au moins deux secondes surfaces de contact (24a) sont formées par des flancs (24a) de dents (24) respectives qui sont fournies côte à côte sur l'élément de serrage (20) dans une rangée s'étendant selon la direction transversale (D).

11. Garde-boue de bicyclette selon l'une des revendications précédentes, **caractérisé en ce que** l'élément de serrage (20) comprend un premier passage de moyen de fixation (26) s'étendant selon la direction longitudinale (L), **en ce que** le corps (30) comprend un second passage de moyen de fixation (34) s'étendant selon la direction longitudinale (L), **en ce que** le premier (26) et le second passage de moyen de fixation (34) sont alignés, **en ce que** le moyen de fixation (9) est fourni pour s'étendre à travers le premier (26) et le second passage de moyen de fixation (34) et pour être déplacé dans ces passages (26), (34) selon la direction longitudinale (L) lorsque le dispositif de serrage (8) est fixé à un composant de bicyclette (3).

12. Garde-boue de bicyclette selon la revendication 11, **caractérisé en ce que** le premier passage de moyen de fixation (26) dans l'élément de serrage (20) a une dimension transversale (X) selon ladite direction transversale (D) telle que l'élément de serrage (20), par rapport au moyen de fixation (9) situé dans le premier passage de moyen de fixation (26), peut être déplacé dans la direction transversale (D) jusqu'à ce qu'il ait atteint la position de serrage.

13. Garde-boue de bicyclette selon l'une des revendications précédentes, **caractérisé en ce que** le moyen de fixation (9) est muni d'un moyen de vissage afin d'être déplacé selon sa direction longitudinale, par rapport au dispositif de serrage (2), lorsque le dispositif de serrage (8) est fixé sur un élément de bicyclette (3).

14. Garde-boue de bicyclette selon l'une des revendications précédentes, **caractérisé en ce que** la position de la tige (2) dans le dispositif de serrage (8) selon la direction de l'axe longitudinal (L) de la tige (2) est réglable, et **en ce que** la tige (2) peut être retenue, au choix, dans l'une d'au moins deux positions différentes dans le dispositif de serrage (8).

15. Bicyclette comprenant au moins un garde-boue de bicyclette ayant les caractéristiques d'une ou plusieurs des revendications précédentes.
